# EUROPEAN PATENT APPLICATION

(11) **EP 4 435 287 A1**
(43) Date of publication of application: **25.09.2024**
(21) Application number: 24166070.3
(22) Date of filing: 25.03.2024
(51) Int. Cl.: F16F 1/374, F16F 1/44, F16F 3/087, A47B 88/477, E05F 5/06

(54) **DAMPING DEVICE FOR FURNISHING ELEMENTS AND FURNITURE PIECE ASSEMBLY COMPRISING SAID DAMPING DEVICE**

(30) Priority: 24.03.2023 IT 202300005691
(71) Applicant: ITALFELTRI S.r.l., 35020 Ponte san Nicolò (PD) (IT)
(72) Inventor: BORSATO, Henry, 35100 Padova (PD) (IT)
(74) Representative: Gallo, Luca

(57) **Abstract**

Damping device (1) for furnishing elements, which comprises a containment body (2), provided with a housing seat (20), which is extended along an extension direction (X) between an upper opening (21) and a bottom opening (22) of the containment body (2), a slider (3), inserted in the housing seat (20) of the containment body (2) and slidable in the housing seat (20) along a sliding direction (T), substantially parallel to the extension direction (X).

The slider (3) at least partly projects outside the upper opening (21) of the housing seat (20), in order to abuttingly receive a movable portion of a furnishing element. The device (1) also comprises damping means (4), which comprise at least one ball (40) that is elastically pliable and made of an elastomeric material, which is inserted in the housing seat (20) of the containment body (2), interposed between the slider (3) and the bottom wall (22) of the containment body (2), in order to damp the impact of the movable portion of the furnishing element on the slider (3).

## Description

### Field of application

The present invention regards a damping device for furnishing elements, and a furniture piece assembly comprising the aforesaid damping device, according to the preamble of the respective independent claims.

The present device is intended to be employed for damping the closure of movable portions of furnishing elements, such as for example doors, drawers, etc., so as to reduce the impact force of the latter against a fixed portion of the same furnishing element.

More particularly, the device, object of the present invention, acts as a bumper device and allows attenuating the noise due to the impact of the movable portion of a furnishing element.

The invention is therefore inserted in the field of furnishing, and more generally in the industrial field of production of bumper devices employable in furnishing elements, regardless of the environment in which such elements are intended to be employed.

### State of the art

Furnishing elements provided with movable portions, such as for example doors or drawers, intended to be moved with respect to a fixed portion between an open position and a closed portion.

In particular, for example, furniture pieces are known that are provided with hinged doors, which comprise a support structure on which a door is hinged, openable in order to allow accessing a space placed inside the furniture piece.

Such furniture pieces are extremely simple and inexpensive with respect to the furniture pieces provided with slidable doors, but have the drawback of being inconvenient and noisy during their use.

In particular, such furniture pieces comprise a perimeter wall, which internally delimits a containment space, and at least one door, hinged to the perimeter wall and movable between an open position, in which it frees the access to the containment volume within the furniture piece, and a closed position, in which it is placed in abutment against the perimeter wall of the furniture piece in order to prevent the access to the aforesaid containment volume. When the door is closed, an impact is therefore generated between the door itself and the wall of the furniture piece, which is often noisy and annoying for the user.

In particular, both the door and the perimeter wall are made of rigid materials, for example wood or metal, and hit against each other, generating an annoying noise in the setting where the furniture piece is situated. Such problem is of course accentuated in the event in which the user does not accompany the door but closes it with greater force towards the perimeter wall of the furniture piece.

In addition, the impact between the door and the perimeter wall of the furniture piece, in addition to being annoying in terms of noise, can cause the of the furniture piece itself, both of the door and of the perimeter wall of the furniture piece.

In order to overcome such drawbacks, damping hinges have been developed, which internally comprise a slowing mechanism that allow braking the door when, during closure, it arrive in proximity to the perimeter wall. This allows the user to be able to close the door, also pushing it or launching it without being worried about the impact between the door and the perimeter wall, since the door will be closed before the impact, reducing the noise and the risk of damage of the furniture piece.

Nevertheless, such solution is difficult since it requires employing hinges that are costlier and more complicated to make. In addition, such solution allows resolving the problems on furniture pieces that have yet to be built, and is harder to employ on furniture pieces that are already assembled together with hinges of conventional type, if not with a long and arduous operation of substitution of all conventional hinges with hinges of damped type.

Therefore, further solutions have been developed for damping the closure of the door of a furniture piece, which provide for mounting a damping device on the furniture piece, adapted to abuttingly receive the door of the furniture piece during closure in order to limit the impact thereof against the perimeter wall of the furniture piece.

More in detail, such damping devices comprise a containment body, internally hollow, within which a piston is slidably housed, intended to abuttingly receive the door, and a helical spring, which is interposed between the piston and a bottom opening of the containment body, in order to damp the impact of the door on the piston.

However, also such damping device solutions have in practice proven that they do not lack drawbacks.

The main drawback lies in the fact that such solutions do not allow effectively damping the impact of the doors, in particular they do not allow appropriately reducing the noise caused by the impact of the door against the damping device. This is widely due to the helical spring, which is usually made of harmonic steel and still causes noise, even if reduced, due to the impact with the piston and with the bottom wall of the containment body.

A further drawback lies in the fact that such solutions are expensive and complicated to produce. In particular, such solutions require the design and production of helical springs with limited dimensions, which are costly in production terms.

A further drawback lies in the fact that such solutions are costly and complicated to assemble. Indeed, during assembly, there is the need to perfectly align and insert the helical spring within the containment body.

A further drawback lies in the fact that such solutions of damping devices are inconvenient and not very pleasing from an aesthetic standpoint. In particular, the normal damping spring devices have large dimensions, due to the technical impossibility of making components (in particular the helical springs) with extremely limited dimensions. However, the dimensions of the current spring damping devices for doors of furniture pieces do not allow their use in high-end furniture pieces, which require minimal components, with limited dimensions, such that they can be hidden so as to increase the aesthetic value of the final furniture piece.

Also known are damping devices for different fields of application, such as for example for the field of suspensions (DE 20201700492), for the field of production of vibrating machines (US 2571281) and for the field of sporting articles, in particular archery (JP S5519908).

### Presentation of the invention

In this situation, the problem underlying the present invention is therefore that of overcoming the drawbacks manifested by the damping devices for doors of furniture pieces of known type, by providing a damping device for doors of furniture pieces, and a furniture piece assembly, which is simple and inexpensive to attain.

A further object of the present invention is to provide a damping device and a furniture piece assembly which is simple and inexpensive to assemble.

A further object of the present invention is to provide a damping device, and a furniture piece assembly, which allows effectively reducing the impact of the door during its closure.

A further object of the present invention is to provide a damping device which allows reducing the noise generated by the impact of the door on the furniture piece during its closure.

A further object of the present invention is to provide a damping device which has limited dimensions.

A further object of the present invention is to provide a damping device, and a furniture piece assembly, which is also employable in furniture pieces with minimalist design.

### Brief description of the drawings

The technical characteristics of the invention, according to the aforesaid objects, can be clearly seen from the contents of the below-reported claims and the advantages thereof will be more evident in the following detailed description, made with reference to the enclosed drawings, which represent a merely exemplifying and non-limiting embodiment of the invention, in which:

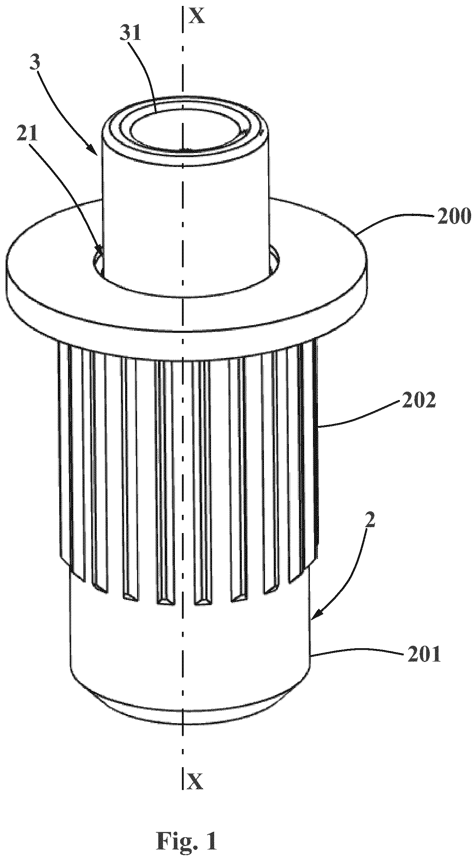

- Fig. 1 shows a perspective view of the damping device for doors of furniture pieces, object of the present invention;
- Fig. 2 shows a sectional view of the device of figure 1, in accordance with a first embodiment;
- Fig. 3 shows a detail of the view of figure 2, relative to a slider in rest position;
- Fig. 4 shows a sectional view of the device of figure 1, in accordance with a second embodiment;
- Fig. 5 shows a detail of the view of figure 4, relative to a slider in rest position;

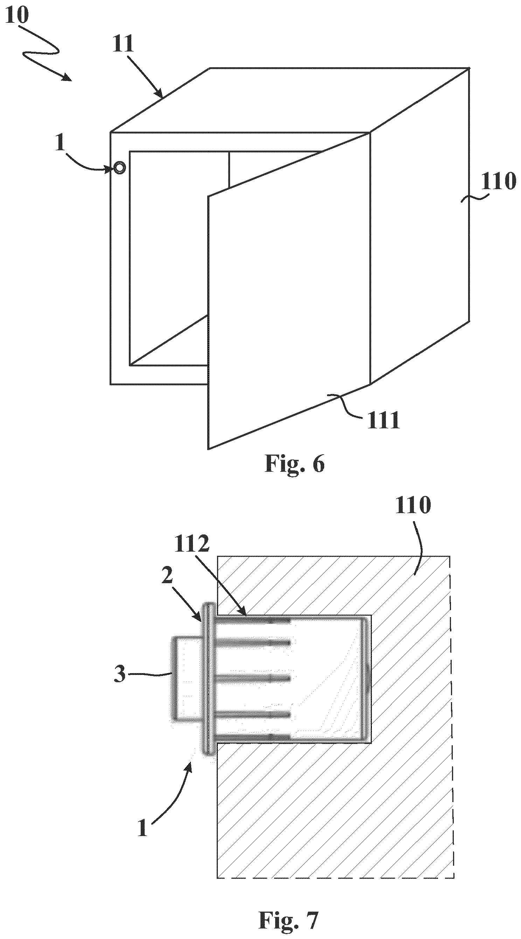

- Fig. 6 shows a perspective view of a furniture piece assembly, object of the present invention, with the damping device mounted on a furnishing element;
- Fig. 7 shows a sectional view of the furniture piece assembly of figure 6.

### Detailed description of a preferred embodiment

With reference to the enclosed drawings, reference number 1 indicates a damping device for furnishing elements, according to the present invention.

Such device is intended to be mounted on a furnishing element 11 in order to abuttingly receive a movable portion 111, such as for example a door, a drawer etc.. during its movement (in particular its closure) with respect to a fixed portion 110 of the same furnishing element 11, so as to damp the impact thereof and reduce the noise caused by the closure of the movable portion 111, as well as to prevent damage of the furnishing element 11.

For example, the furnishing element can be a furniture piece, a fixture etc..

In such case, the fixed portion 110 can be a framework of the furniture piece or of the fixture, and the movable portion 111 can for example be a door, a drawer or any one element that can be moved with respect to the fixed portion 110 between a closed position and an open position.

In particular, the device 1 is advantageously mountable on a framework of a furnishing element 11, as better described in detail hereinbelow.

In the following present description, for the sake of descriptive simplicity, reference will be made to a damping device for doors of furniture pieces, hence intended to abuttingly receive a door in order to attenuate the impact thereof against the framework of the furniture piece itself. Of course, without departing from the protective scope of the present invention, the device 1 can be intended to receive, in abutment, a movable portion of any one other furnishing element, in order to attenuate the impact thereof against the fixed portion of the furnishing element itself.

In accordance with the invention, the damping device 1 comprises a containment body 2, which is provided with a housing seat 20, which is extended along an extension direction X between an upper opening 21, preferably circular, and a bottom opening 22 of the containment body 2.

Advantageously, the containment body 2 is extended along the aforesaid extension direction X between a first end 2', at which the aforesaid upper opening 21 is obtained, and an opposite second end 2", at which the bottom wall 22 is obtained.

Preferably, the containment body 2 is extended along the aforesaid extension direction X for a length comprised between 5 and 30 mm, and still more preferably between 10 and 20 mm.

In accordance with the preferred embodiment, the containment body 2 has a length along the aforesaid extension direction X comprised between 9 and 11 mm.

Preferably, the containment body 2 is attained of a polymer material, in particular a thermoplastic polymer such as for example (in a non-limiting manner) polypropylene or ABS.

Advantageously, the containment body 2 has a cylindrical form, and preferably also the housing seat 20 within the containment body 2 is a cylindrical seat.

Preferably, the containment body 2 comprises an enlarged head 200, on which the upper opening 21 is obtained, and a main body 201, which is extended projectingly from the enlarged head 200 and internally defines the aforesaid housing seat 20.

More in detail, the enlarged head 200 is made at the first end 2' of the containment body 2.

The device 1 also comprises a slider 3, which is inserted in the housing seat 20 of the containment body 2 and is slidable in the housing seat 20, along a sliding direction T substantially parallel to the extension direction X. Preferably, the slider 3 is made of a polymer material, in particular a thermoplastic polymer such as for example (in a non-limiting manner) polypropylene or ABS.

Advantageously, the slider 3 has a cylindrical form, substantially counter-shaped with respect to the cylindrical housing seat 20 of the containment body 2. In particular, as better subsequently described, the slider 3 is susceptible of sliding in the housing seat 20, preferably substantially to size, following the impact in the closure of the movable portion (door, drawer etc..) of the furnishing element on which the device is mounted. The slider 3 at least partly projects outside the upper opening 21 of the housing seat 20, and is provided with a reception wall 31, frontal, intended to receive in abutment the aforesaid movable portion. Advantageously, the slider 3 is extended along the sliding direction X between a first end 3', placed outside the housing seat 20 and at which the aforesaid reception wall 31 is obtained, and a second end 3", which is placed within the housing seat 20. Advantageously, the slider 3 is provided with a thrust wall 32, which is made at the second end 3", and is preferably placed parallel to the reception wall.

Preferably, the reception wall 31 and the thrust wall 32 are substantially extended orthogonal to the extension direction X.

In particular, the slider 3 is movable along the sliding direction T between a work position, in which the slider 3 is inserted towards the bottom wall 22, preferably with the second end 3" of the slider 3 placed approached to the bottom wall 22 of the containment body 2, and a rest position, in which the slider 3, in particular the second end 3" of the latter, is moved away from the bottom wall 22 of the containment body 2. The device 1 also comprises damping means 4, which comprise at least one ball 40 that is elastically pliable and made of an elastomeric material, which is inserted in the housing seat 20 of the containment body 2, interposed between the slider 3 and the bottom wall 22 of the containment body 2, in order to damp the impact of the movable portion of the furnishing element on the slider 3.

As set forth above, each ball 40 is made of an elastomeric material, advantageously an thermoplastic elastomer (or thermoplastic rubber), or made vulcanized rubber, or of silicon rubber.

More in detail, the ball 40 is interposed between the bottom wall 22 of the containment body 2 and the second end 3" of the slider 3. Preferably, the ball 40 is inserted substantially to size within the housing seat 20. The ball 40 is configured for being elastically deformed following a compression thereof, in particular due to the impact of the movable portion. In particular, the ball 40 is configured for exerting an elastic return force on the slider 3 (in particular on the thrust wall 32 of the latter) when this is moved between the rest position and the work position (e.g. following the closure of the door), in order to bring the slider 3 back from the work position to the rest position (following the reopening of the door).

In other words, the ball 40 is compressible between a rest configuration of minimum compression (or not compressed), and a work configuration of maximum compression, in which the ball 40 exerts an elastic force in order to return towards the configuration of minimum compression.

Preferably, the device 1 is sized such that the ball 40 is precompressed when the slider 3 is situated in the rest position, so as to exert a constant thrust on the slider 3 even when the door of the furniture piece is open.

Advantageously, the damping means 4 are sized such that the ball 40 is in the configuration of minimum compression when the slider 3 is situated in the rest position, and on the contrary is situated in the configuration of maximum compression when the slider 3 is situated in the work position.

Advantageously, the slider 3 is provided, at least at the second end 3" thereof, with a cavity 33. In particular, the cavity 33 is preferably a substantially hemispherical cavity and is extended in a depression from the thrust wall 32 of the slider 3, towards the first end 3' of the latter. Advantageously, the aforesaid cavity 33 is configured for at least partially receiving the ball 40, preferably via shape coupling. In this manner, the contact area between the slider 3 and the ball 40 is increased with respect to a slider 3 provided with a planar thrust wall 32. In addition, in this manner it is possible to maintain a constant alignment between the slider 3 and the ball 40, limiting the misalignment between the two components and thus ensuring a greater uniformity during the compression of the ball 40.

Advantageously, the slider 3 is symmetric, and in particular has the same cavity 33 also on the reception wall, so as to allow its insertion in the housing seat 20 regardless of which wall (reception or thrust) is inserted first.

Advantageously, the damping means 4 comprise two rubber balls 40, which are placed on each other, aligned along the extension direction X. In particular, the damping means 4 comprise a first ball 40, which is placed on the upper part, towards the upper opening 21 of the housing seat 20, and a second ball 40', placed below the first ball 40, towards the bottom wall 22. More in detail, the first ball 40 is placed in abutment against the slider 3, in particular against the thrust wall 32 of the latter, while the second ball 40' is interposed between the first ball 40' and the bottom wall 22, in abutment against the latter.

Of course, without departing from the protective scope of the present invention, the damping means 4 can comprise a greater of balls 40, preferably stacked on each other along the extension direction X.

Advantageously, the containment body 2 comprises a first undercut 23, made at the upper opening 21. In particular, the first undercut 23 is defined by a first shoulder, preferably a radial shoulder. More in detail, the containment body 2 is provided with an internal surface, which laterally limits the housing seat 20, and the aforesaid first shoulder is extended radially projecting from the internal surface, towards the interior of the housing seat 20, in order to delimit a corresponding first narrowing of the housing seat 20. As set forth above, the first undercut 23 is made at the upper opening 21 and therefore advantageously delimits a narrowing of the upper opening 21. Preferably, the first undercut 23 is extended circumferentially without interruption on the internal surface of the containment body 2.

Advantageously, the first undercut 23 is shaped as a V. In particular, the first undercut 23 is provided with two main walls, which are projectingly extended from the internal surface of the containment body 2, and a connector wall, placed to connect between the two aforesaid main walls.

More in detail, the first undercut 23 is provided with a first main wall 231, directed towards the bottom wall 22, and a second main wall 232, directed towards the upper opening 21.

Advantageously, at least the first main wall 231 of the first undercut 23 is tilted, in particular towards the upper opening 21. Preferably, also the second main wall 232 of the first undercut 23 is tilted, in particular towards the first main wall 231.

Advantageously, the slider 3 comprises at least one circumferential rib 30 which is susceptible of being placed in abutment against the first undercut 23. Preferably, the circumferential rib 30 is attained in a single body with the rest of the slider 3.

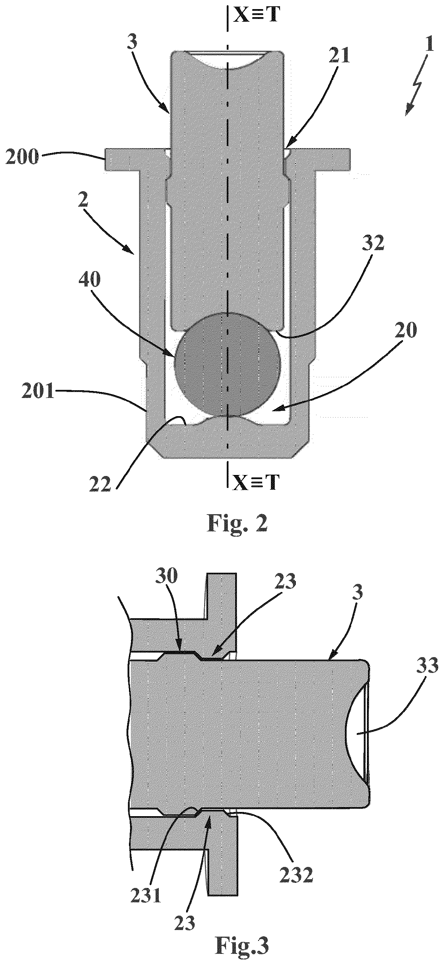

In particular, the slider 3 has an elongated body, which is provided with an external surface, preferably cylindrical, and the circumferential rib 30 is extended projecting, preferably radially, from the external surface of the elongated body. As is visible in figure 2, with the slider 3 inserted in the housing seat 20 of the containment body 2, the circumferential rib 30 is placed below the first undercut 23, towards the bottom wall 22, in order to prevent the exit of the slider 3 from the housing seat 20 along the sliding direction T, in particular following the elastic action of the ball or balls 40.

Preferably, the circumferential rib 30 is placed in abutment against the internal surface of the containment body 2 and is susceptible of sliding along the latter during the sliding of the slider 3 in the housing seat 20 along the sliding direction T. Advantageously, at least the circumferential rib 30, and preferably the entire slider 3, is made of a deformable material, in a manner such to allow the rib 30 to be deformed during the first insertion of the slider 3 in the housing seat 20. In particular, the circumferential rib 30 is advantageously susceptible of being at least partially deformed along a direction orthogonal to the sliding direction T during the insertion of the slider 3 in the housing seat 20.

Advantageously, the rib 30 is V-shaped. In particular, the rib 30 is provided with a tapered profile and is provided with an upper abutment wall, directed towards the upper opening 21, which is preferably tilted, in particular by an angle equal to the tolt of the first main wall 231 of the first undercut 23, such to be placed facing, substantially coplanar with, the first main wall 231 of the first undercut 23 when the slider 3 is placed in the rest position, with the rib 30 in abutment against the first undercut 23.

Advantageously, the containment body 2 comprises a second undercut 23', placed within the housing seat 20, towards the bottom wall 21 with respect to the first undercut 23.

Advantageously, in accordance with the preferred embodiment illustrated in the enclosed figures, the slider 3 comprises multiple ribs 30, which are spaced from each other along a circumferential direction of the external surface of the slider 3.

Alternatively, it is also possible to provide for a single rib 30 on the slider 3, such rib 30 extended preferably without interruption along the entire circumference of the slider 3 itself.

In particular, the second undercut 23' is defined by a second shoulder, preferably radial. More in detail, the aforesaid second shoulder is extended radially projecting from the internal surface, towards the interior of the housing seat 20, in order to delimit a corresponding second narrowing of the housing seat 20. Preferably, the second undercut 23' is extended circumferentially without interruption on the internal surface of the containment body 2.

Advantageously, the circumferential rib 30 of the slider 3 is susceptible of abutting against the second undercut 23' in order to stop the sliding of the slider 3 along the sliding direction T.

Advantageously, the second undercut 23' is V-shaped. In particular, also the second undercut 23' is provided with two main walls, placed tilted with respect to each other, in order to improve the abutment between the rib 30 of the slider 3 and the second undercut 23' .

Preferably, the first and the second undercut 23, 23' are attained in a single body with the containment body 2 and still more preferably are provided with the same radial extension, measured orthogonally to the sliding direction T.

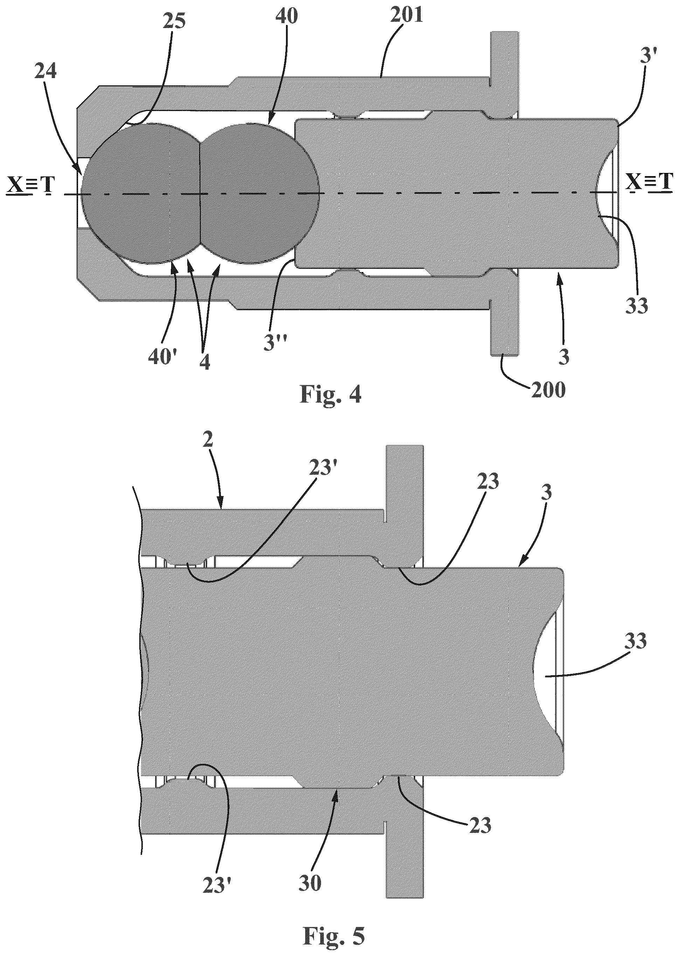

More in detail, as is visible in figure 5, with the slider 3 inserted in the housing seat 20 of the containment body 2, the circumferential rib 30 is interposed between the first undercut 23 and the second undercut 23', with the second undercut 23' that prevents an excessive sliding of the slider 3 in the housing seat 20, along the sliding direction T, towards the bottom wall 22. In other words, the slider 3 is advantageously free of sliding in the housing seat 20, during use, between the first undercut 23 and the second undercut 23'. In particular, with the slider 3 placed at the first undercut 23 (preferably in abutment) when it is situated in the rest position, and at the second undercut 23' (preferably in abutment) when it is situated in the work position.

Advantageously, the housing seat 20 is provided with a first diameter D1, and each ball 40 is provided with a second diameter D2, smaller than the first diameter D1 of the housing seat 20, in order to allow the elastic deformation of the ball 40 following the movement of the slider 3 along the sliding direction T.

More in detail, the ball 40 and the housing seat 20 are shaped so as to allow the free deformation, preferably substantially radial, of the ball 40 following a compression thereof by the slider 3 along the sliding direction T. In particular, the deformation of the ball 40 occurs along one or more directions orthogonal to the direction in which the ball 40 is compressed, and hence orthogonally to the sliding direction T of the slider 3.

Advantageously, the second diameter D2 of each ball 40 is comprised between 1 and 9 mm, and in particular is comprised between 4 and 8 mm.

Preferably, the second diameter D2 of each ball 40 is comprised between 1 and 6 mm, and still more preferably is comprised between 2 and 4 mm.

In addition, preferably, the first diameter D1 of the housing seat 20 is comprised between 2 and 7 mm, and still more preferably between 3 and 6 mm.

Advantageously, the containment body 2 has a through opening 24, made on the bottom wall 22 and provided with a third diameter D3, smaller than the second diameter D2 of the ball 40. In particular, in the case of two balls 40 as described above, the third diameter D3 of the through opening 24 is smaller than the second diameter D2 of the second ball 40'.

Advantageously, the ball 40, in particular the second ball 40', is placed to partially traverse of the through opening 24, in order to define a rear abutment surface of the device 1.

More in detail, the ball 40 partially traverses the through opening 24 and projects posteriorly from the bottom wall 22, such to allow the device 1 to rest posteriorly on the ball portion 40 that projects from the through opening 24.

In this manner, it is possible to reduce the impact even behind the device 1, in particular between the containment body 2 and an element of the furniture piece on which the bottom wall 22 of the containment body 2 rests.

Advantageously, the through opening 24 is extended on the bottom wall 22, along the extension direction X, with a tapered profile, substantially hemispherical, in order to define a housing seat 25 for the ball 40. More in detail, the ball 40 (in particular the second ball 40') is partially housed in the housing seat 25.

Advantageously, the containment body 2 is provided with ribs 202, which are preferably made on the elongated body 201 of the containment body 2.

In particular, the containment body 2 is provided with an external surface, opposite the aforesaid internal surface, which is provided with the ribs 202. Advantageously, the ribs 202 are extended substantially parallel to the extension direction X, and are preferably aligned with each other along a circumferential alignment direction on the entire external surface of the containment body 2. Preferably, the ribs 202 are not extended parallel to the extension direction X for the entire vertical extension of the containment body 2.

Also forming the object of the present invention is a furniture piece assembly, which comprises a furnishing element, and a damping device of the above-described type.

As mentioned above, the device 1 is intended to be mounted on a furniture piece (or furnishing element) and is mountable on the latter in different ways. For example, in accordance with the preferred embodiment, the device 1 can be housed, preferably by interference, within a framework of the furniture piece. In particular, the device 1 advantageously can be housed within a seat 112 made on the external frame of the furniture piece, at an abutment point of the door or of the drawer.

More in detail, the fixed portion 110 of the furnishing element 11 comprises an external frame, which preferably perimetrically delimits an access opening to an internal volume of the furnishing element, for example susceptible of containing the objects placed there by a user.

The seat 112 is advantageously made on one wall of the external frame of the fixed portion 110 of the furnishing element 11. Preferably, the seat 112 is extended in a depression from the aforesaid wall, along a direction orthogonal to the plane on which the aforesaid external frame is extended.

Advantageously, the seat 112 is shaped to size with respect to the main body 201 of the containment body 2.

The seat 112 is advantageously blind, and is accessible only on the front part, from a front side of the fixed portion 110 of the furnishing element 11, and such front side is closed by the movable portion 111 of the same furnishing element 11 when the latter is in the closed position.

In such case, the ribs 202 advantageously allow retaining the containment body 2 by interference within the seat 112, reducing the risk that the latter could exit from the seat 112 in which it is housed.

In addition, in such case, the device 1 can be positioned within the aforesaid seat 112 with the enlarged head 200 of the containment body 2 placed in abutment, with a rear stop wall thereof (directed towards the bottom wall 22), against a wall of the furniture piece placed perimetrically with respect to the housing seat 112, so as to prevent an excessive insertion of the device 1 in the seat.

In particular, the aforesaid wall of the furniture piece is the wall of the external frame of the furnishing element 11, which is placed perimetrically with respect to the seat 112 and abuttingly receives the enlarged head 200 in order to stop the insertion of the device 1 in the seat 112.

More in detail, the damping device 1 can be inserted from the aforesaid front side, translating the main body 201 within the seat 112, up to placing the enlarged head 200 in abutment against the wall of the external frame of the fixed portion 110 of the furnishing element 11.

Therefore, once the damping device 1 is inserted, it is advantageously prevented in its further movement by the abutment between its enlarged head 200 and the wall of the external frame of the fixed portion 110 of the furnishing element 11, and is preferably retained in an opposite direction by the presence of the ribs 202 which interfere against an internal wall of the seat 112.

Preferably, the enlarged head 200 of the containment body 2 has an external diameter comprised between 6 and 11 mm, and still more preferably comprised between 7 and 10 mm.

Of course, without departing from the protective scope of the present invention, the device 1 can also be fixed outside a housing seat made on the furniture piece, e.g. via gluing, screwing etc..

The invention thus conceived therefore attains the pre-established objects.

## Claims

1. Damping device (1) for furnishing elements, which comprises:
- a containment body (2), provided with a housing seat (20), which is extended along an extension direction (X) between an upper opening (21) and a bottom wall (22) of said containment body (2);
- a slider (3), inserted in the housing seat (20) of said containment body (2) and slidable in said housing seat (20) along a sliding direction (T), substantially parallel to said extension direction (X);
said slider (3) at least partly projecting outside the upper opening (21) of said housing seat (20), in order to abuttingly receive a movable portion of a furnishing element;
- damping means (4), which comprise at least one elastically pliable sphere (40) and made of an elastomeric material, which is inserted in the housing seat (20) of said containment body (2), interposed between said slider (3) and the bottom wall (22) of said containment body (2), in order to damp the impact of the movable portion of the furnishing element on said slider (3).

2. Device according to claim 1, **characterized in that** said damping means (4) comprise two spheres (40), which are placed on each other, aligned along said extension direction (X).

3. Device according to claim 1 or 2, **characterized in that** said containment body (2) comprises a first undercut (23), made at said upper opening (21), and the slider (3) comprises a circumferential rib (30) which is placed in abutment against said first undercut (23).

4. Device according to claim 3, **characterized in that** said containment body (2) comprises a second undercut (23'), placed within said housing seat (20), towards the bottom wall (21) with respect to said first undercut (23), and the circumferential rib (30) of said slider (3) being susceptible of abutting against said second undercut (23') in order to stop the sliding of said slider (3) along said sliding direction (T).

5. Device according to any one of the preceding claims, **characterized in that** said housing seat (20) is provided with a first diameter (D1), and each sphere (40) is provided with a second diameter (D2), smaller than the first diameter (D1) of said housing seat (20), in order to allow the elastic deformation of said sphere (40) following the movement of said slider (3) along said sliding direction (T).

6. Device according to claim 5, **characterized in that** the second diameter (D2) of each said sphere (40) is comprised between 1 and 6 mm.

7. Device according to claim 6, **characterized in that** the second diameter (D2) of each said sphere (40) is comprised between 2 and 4 mm.

8. Device according to any one of the claims from 5 to 7, **characterized in that** said containment body (2) has a through opening (24), made on said bottom wall (22) and provided with a third diameter (D3), smaller than the second diameter (D2) of said sphere (40);
said sphere (40) being placed to partially traverse said through opening (24), in order to define a rear abutment surface of said device (1).

9. Device according to claim 8, **characterized in that** said through opening (24) is extended on said bottom wall (22), along said extension direction (X), with a tapered profile, substantially hemispherical, in order to define a housing seat for said sphere (40).

10. Device according to any one of the preceding claims, **characterized in that** said containment body (2) is provided with multiple ribs (202), adapted to retain said containment body (2) within a furniture piece housing seat.

11. Device according to any one of the preceding claims, **characterized in that** said containment body (2) comprises an enlarged head (200), on which said upper opening (21) is made, and a main body (201), which is extended projectingly from said enlarged head (200) and internally defines said housing seat (20).

12. Furniture piece assembly (10) comprising:
- a furnishing element (11), which is provided with:
- a fixed portion (110);
- a movable portion (111), which is movable with respect to said fixed portion (110) between a closed position and an open position;
- a damping device (1) according to any one of the preceding claims, which is mounted on the fixed portion (110) of said furnishing element (11) and is intended to abuttingly receive the movable portion (111) of said furnishing element (11) during its movement in said closed position.

13. Furniture piece assembly (10) according to claim 11 and 12, **characterized in that** the fixed portion (110) of said furnishing element (11) comprises an external frame, on which a seat (112) is made, and said damping device (1) is positioned within the seat (112) of said furnishing element (11);
in which the enlarged head (200) of said containment body (2) is placed in abutment, with a rear stop wall thereof directed towards said bottom wall (22), against a wall of the external frame of said furnishing element (11), such wall placed perimetrically with respect to said seat (112), in order to stop the insertion of said device (1) in said seat (112).
